# EUROPEAN PATENT APPLICATION

(11) **EP 4 446 081 A1**
(43) Date of publication of application: **16.10.2024**
(21) Application number: 22903762.7
(22) Date of filing: 22.06.2022
(51) Int. Cl.: B29B 17/04, B02C 18/00, B29D 30/00, B60C 19/00

(54) **WASTE TIRE PROCESSING METHOD**

(30) Priority: 09.12.2021 JP 2021200143
(71) Applicant: BRIDGESTONE CORPORATION, Chuo-ku Tokyo 104-8340 (JP)
(72) Inventor: SUKEGAWA Shin, Tokyo 104-8340 (JP); HOSHINO Hironori, Tokyo 104-8340 (JP)
(74) Representative: Marks & Clerk LLP
(86) International application number: PCT/JP2022/024950
(87) International publication number: WO 2023/105826

(57) **Abstract**

A waste tire processing method of the present disclosure is a waste tire processing method to recycle a waste tire and includes: a hole forming process of forming a hole 20 that is a recess 21 or a through hole 22 on the waste tire; and a crushing process performed after the hole forming process, the crushing process of crushing the waste tire using a blade 30a in a crusher 30 having the blade 30a.

## Description

### TECHNICAL FIELD

This disclosure relates to a waste tire processing method.

### BACKGROUND

It is conventionally known a waste tire processing method to recycle waste tires. It is necessary to crush waste tires to recycle the waste tires. For example, PTL 1 discloses fracturing a waste tire using a fracture apparatus having a rotary blade.

### CITATION LIST

### Patent Literature

PTL 1: JP2003-220349A

### SUMMARY

### (Technical Problem)

However, when waste tires are crushed using a blade in a crusher having the blade as in the above conventional technique, the blade may be less likely to catch on the waste tires, which may not sufficiently increase the efficiency of the crushing process.

Therefore, it could be helpful to provide a waste tire processing method that can increase the crushing efficiency of a waste tire.

### (Solution to Problem)

A waste tire processing method of the present disclosure is a waste tire processing method being available to recycle a waste tire, the method including:
a hole forming process of forming a hole that is a recess or a through hole on the waste tire; and
a crushing process performed after the hole forming process, the crushing process of crushing the waste tire using a blade in a crusher having the blade.

### (Advantageous Effect)

According to this disclosure, it is possible to provide a waste tire processing method that can increase the crushing efficiency of a waste tire.

### BRIEF DESCRIPTION OF THE DRAWINGS

In the accompanying drawings:
FIG. 1 is a tire width direction cross-sectional view illustrating one example of a tire as a waste tire that can be a subject for processing in a waste tire processing method according to one of the disclosed embodiments;
FIG. 2 is a flowchart illustrating the waste tire processing method according to one of the embodiments;
FIG. 3 is a schematic partial cross-sectional view illustrating one example of a state of a sidewall portion of a waste tire after performing a hole forming process;
FIG. 4 is a partial cross-sectional side view illustrating one example of a crusher that can be used in a crushing process; and
FIG. 5 is a top view of a cutter in the crusher in FIG. 4.

### DETAILED DESCRIPTION

A waste tire processing method according to this disclosure can be preferably utilized to recycle waste tires for any type of tires such as passenger vehicle pneumatic tires, pneumatic tires for truck and bus, and pneumatic tires for construction and mine vehicles.

Embodiments of the waste tire processing method according to this disclosure will be exemplified and described hereinafter with reference to the drawings.

Members and portions common between the figures have the same reference signs. In some drawings, a reference sign "RD" refers to a tire radial direction, a reference sign "WD" refers to a tire width direction, a reference sign "WDI" refers to an inside in the tire width direction (side near a tire lumen in the tire width direction), and a reference sign "WDO" refers to an outside in the tire width direction (side away from the tire lumen in the tire width direction).

A waste tire that can be a subject for processing in the waste tire processing method according to this disclosure will be first described.

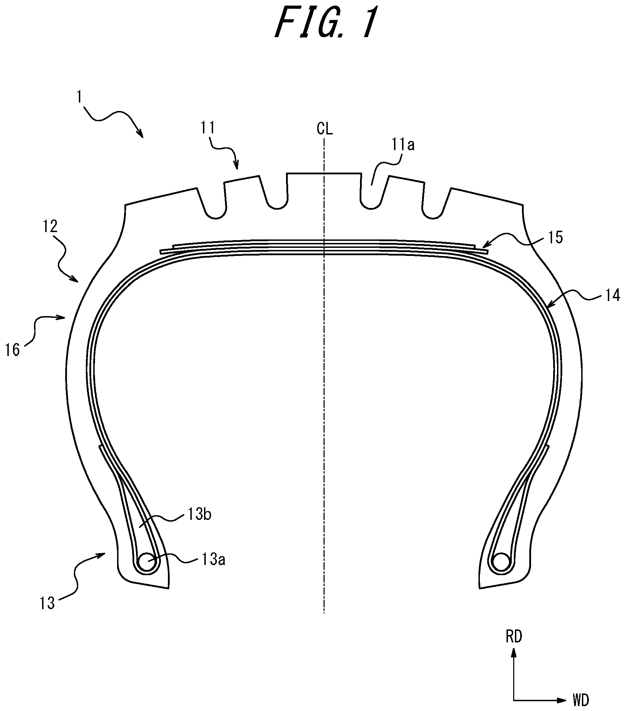

FIG. 1 is a tire width direction cross-sectional view illustrating one example of a tire as a waste tire that can be a subject for processing in the waste tire processing method according to one of the disclosed embodiments. For explanatory convenience, the configuration of this waste tire is described as being in a state where this tire is new. This waste tire may be any type of tire. The "waste tire" herein includes not only a used tire but also a tire that becomes unnecessary for other reasons.

The positional relationship, etc. of respective components in the illustration of FIG. 1 will be described assuming that a tire is in a state where the tire is mounted on an applicable rim and filled with a prescribed internal pressure to have no load.

The "applicable rim" herein is an approved rim ("Measuring Rim" in The European Tyre and Rim Technical Organisation (ETRTO) STANDARDS MANUAL, "Design Rim" in The Tire and Rim Association, Inc. (TRA) YEAR BOOK) in applicable size described or to be described in future in an effective industrial standard in areas where tires are produced or used, such as Japan Automobile Tyre Manufacturers Association (JATMA) YEAR BOOK in Japan, ETRTO STANDARDS MANUAL in Europe, or TRA YEAR BOOK in the United States. However, in the case of a size that is not described in such industrial standard, the rim refers to a rim having a width corresponding to a bead width of the pneumatic tire. The "applicable rim" includes sizes to be described in future in the above industrial standard, in addition to the current sizes. Examples of "the size to be described in future" include sizes described as "FUTURE DEVELOPMENTS" in 2013 edition of the manual of ETRTO).

Furthermore, "a prescribed internal pressure" indicates an air pressure (a maximum air pressure) corresponding to a maximum load capability of a single wheel in an applicable size and ply rating described in the above industrial standard of JATMA YEAR BOOK or the like. In the case of a size that is not described in the above industrial standard, "the prescribed internal pressure" refers to an air pressure (the maximum air pressure) corresponding to the maximum load capability prescribed for each vehicle on which the tire is mounted.

As illustrated in FIG. 1, a tire 1 as a waste tire includes a tread portion 11, a pair of sidewall portions 12 extending from both ends in the tire width direction of this tread portion 11 to the inside in the tire radial direction, and a pair of bead portions 13 provided at ends inside in the tire radial direction of the respective sidewall portions 12. The tread portion 11 is a part in the tire width direction between a pair of ground contact edges of the tire 1. The bead portions 13 are parts configured to be in contact with a rim inside in the tire radial direction and outside in the tire width direction when the tire 1 is mounted on the rim.

The tire 1 has a pair of side portions 16 extending from both ends in the tire width direction of the tread portion 11 to the inside in the tire radial direction. The side portion 16 includes a sidewall portion 12 and a bead portion 13.

The tire 1 also includes a pair of bead cores 13a and a pair of bead fillers 13b, which are provided on the bead portions 13, a carcass 14 extending between the pair of bead portions 13, and a belt 15 arranged outside in the tire radial direction with respect to the crown portion of the carcass 14. More specifically, the carcass 14 straddles between the bead cores 13a of the pair of bead portions 13 and extends in a toroidal shape through the pair of sidewall portions 12 and the tread portion 11. The above sidewall portion 12 refers to a part inside in the tire radial direction with respect to at least the belt 15 and a part outside in the tire radial direction with respect to the bead portion 13. The tire 1 has grooves 11a extending in, for example, the tire circumferential direction and/or the tire width direction on the tread portion 11. The tire 1 also may have an inner liner on the inner surface facing the tire lumen.

Each bead core 13a includes one or a plurality of bead wires surrounded by rubber coating. The bead wire can be formed of, for example, metal (for example, steel) monofilaments or stranded wires. The respective bead fillers 13b are each positioned outside in the tire radial direction with respect to the corresponding bead core 13a. The bead filler 13b is made of, for example, rubber. The bead filler 13b may consist of a plurality of (for example, two) bead filler portions.

The carcass 14 consists of at least one (one in the example of FIG. 1) carcass ply. Each carcass ply includes one or a plurality of carcass cords and coating rubber with which the carcass cords are coated. The carcass cord may be formed of, for example, monofilaments or stranded wires. The carcass cord may be formed of an organic fiber consisting of polyester, nylon, rayon, aramid, or the like or may be formed of metal (for example, steel).

The belt 15 consists of at least one (two in the example of FIG. 1) belt layer. Each belt layer includes one or a plurality of belt cords and coating rubber with which the belt cords are coated. The belt cord may be formed of, for example, monofilaments or stranded wires. The belt cord may be formed of metal (for example, steel) or may be formed of an organic fiber consisting of polyester, nylon, rayon, aramid, or the like.

The tire 1 in the example of FIG. 1 is symmetric with respect to a tire equatorial plane CL. In other words, in the configuration of this tire 1, the configuration of a part on one side in the tire width direction with respect to the tire equatorial plane CL is equal to the configuration of a part on the other side in the tire width direction. However, the configuration of the tire 1 may be asymmetric with respect to the tire equatorial plane CL.

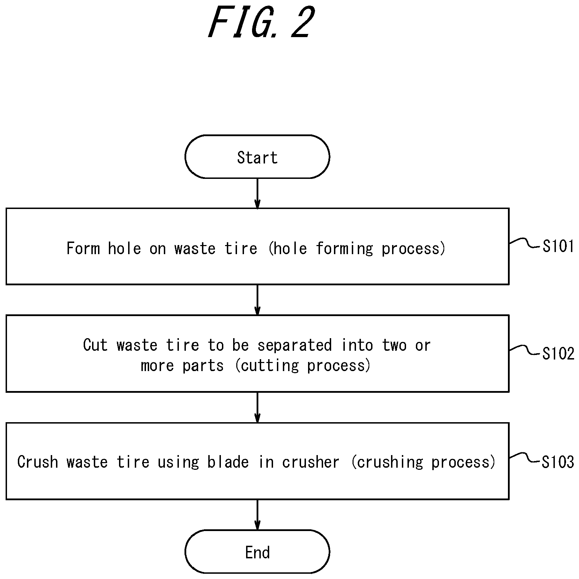

The following describes the waste tire processing method according to one of the embodiments with reference to FIG. 2 to FIG. 5.

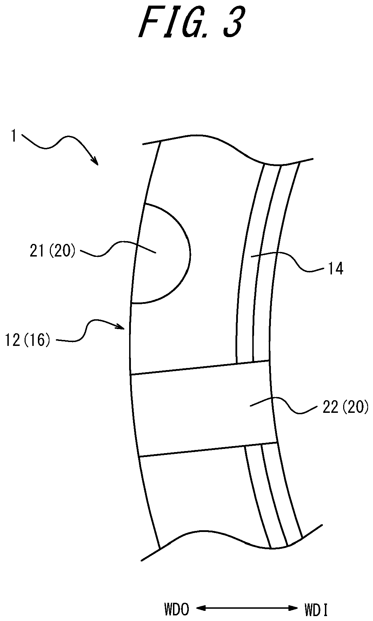

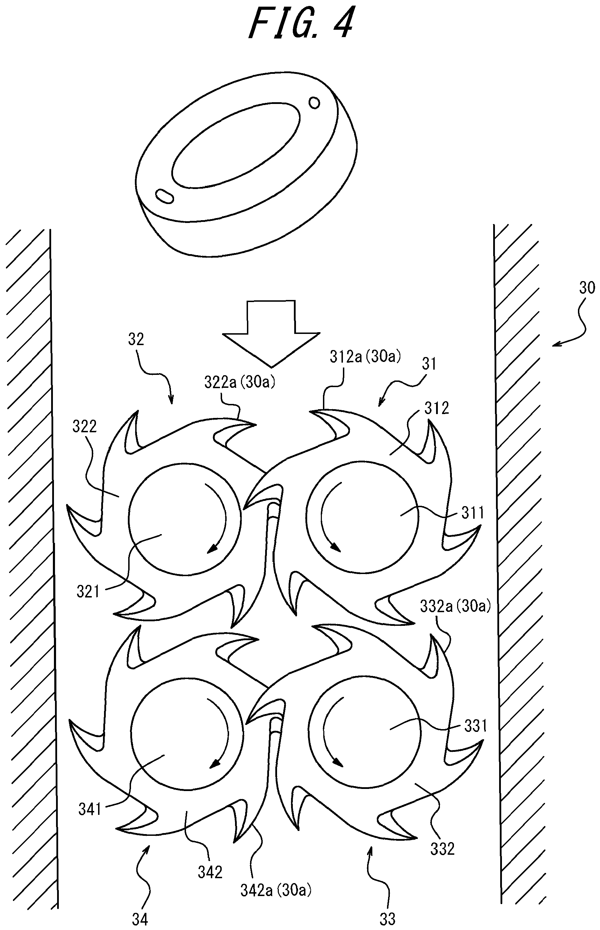

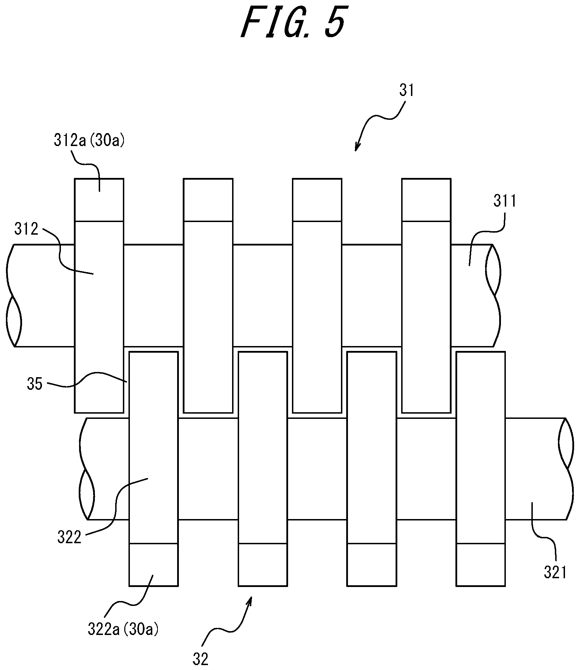

FIG. 2 is a flowchart illustrating the waste tire processing method according to one of the embodiments. FIG. 3 is a schematic partial cross-sectional view illustrating one example of a state of a sidewall portion of a waste tire after performing a hole forming process. FIG. 4 is a partial cross-sectional side view illustrating one example of a crusher that can be used in a crushing process. FIG. 5 is a top view of a cutter in the crusher in FIG. 4.

As illustrated in FIG. 2, the waste tire processing method of this embodiment includes the hole forming process (step S101), a cutting process (step S102), and the crushing process (step S103) in this order.

The waste tire processing method according to this embodiment can be utilized to recycle a waste tire. In other words, the waste tire processing method according to this embodiment can be used for recycling respective materials that form the waste tire by, for example, separating and obtaining them, by, for example, crushing the waste tire.

### (Hole forming process)

In this embodiment, a hole that is a recess or through hole is first formed on a waste tire in the hole forming process (step S101).

As described above, the waste tire to be processed in the waste tire processing method of this embodiment, that is, a waste tire prepared for performing the hole forming process may be a used tire or a tire that becomes unnecessary for other reasons (for example, reasons such as being determined as an inferior product in a process for testing products).

As exemplified in FIG. 3, in this embodiment, a hole 20 to be formed on the waste tire may be a recess 21 or a through hole 22. The "through hole" herein refers to a hole that penetrates any part of the waste tire. The "recess" refers to a hole that does not penetrate the waste tire, in other words, a recess (depression) without penetration and with a bottom. The "hole" herein refers to a recess or a through hole, in other words, includes both of the recess and the through hole. The "hole formation" herein refers to forming the above hole (in other words, providing a hole) and therefore forming the above recess or through hole (in other words, providing a recess or a through hole). That is, the "hole formation" includes both of forming a recess and a forming a through hole.

FIG. 3 illustrates an example in which both holes 20, a roughly semicircular recess 21 and a cylindrical through hole 22, are closely formed on the sidewall portion 12 of the side portion 16 in the tire 1 as a waste tire, in the hole forming process according to this embodiment. However, the shape, arrangement position, number, type, and the like of the hole 20 formed in the hole forming process have preferred examples, which are described below, but are not specifically limited.

To recycle a waste tire, the waste tire needs to be crushed. To crush a waste tire, the crush is performed, for example, using a blade 30a in a crusher 30 (see FIG. 4 and FIG. 5) such as an example described below. However, in this case, in this crushing process, the blade 30a does not easily catch on the surface of the waste tire, and therefore, the crushing efficiency as a production efficiency in the crushing process may not sufficiently increase or may decrease.

Thus, performing the hole forming process of forming the hole 20 on the waste tire as preprocessing of the crushing process that is the main processing as in this embodiment makes the blade 30a in the crusher 30 easier to catch on this hole 20 of the waste tire. The blade 30a cuts into the waste tire with the caught position as a starting point to start and facilitate the crush. That is, the waste tire processing method of this embodiment includes the hole forming process of forming the hole 20 on the tire 1 as a waste tire prior to the crushing process, which is described below, thus enabling an increase in the crushing efficiency of the waste tire.

The means and method of the hole formation in the hole forming process are not particularly limited.

For example, to form the recess 21, a scooper or the like can be used. To form the through hole 22, for example, a cylindrical jig with a bottom may be pushed into the waste tire with the bottom portion of the jig on the near side, or by using a hollow rod as a cylindrical jig without a bottom, after a cylindrical cut that penetrates the waste tire is made, rubber and the like inside this cut may be extruded. The hole formation can be performed using commonly known or commercially available means, method, and tool including a jig. The hole formation may be manually performed or may be performed using a dedicated machine or the like.

There is a case (not illustrated) where, for example, a communication apparatus as an electronic device such as a RF tag consisting of an IC chip and an antenna, or another electronic device may be provided on the inside or surface of the tire 1 (see FIG. 1 and FIG. 3) as a waste tire. In this case, it is preferable that, in the above hole forming process, when hole formation is performed on the waste tire (that is, when a hole is formed), this communication apparatus or electronic device is entirely removed together with the part removed by the hole formation, of the waste tire, at the same time as the hole formation. This can reduce the possibility of the degradation in quality of the materials to be obtained in the subsequent crushing process, due to the unexpected mix of materials that differ from the materials that form the waste tire. This can also remove this communication apparatus or electronic device without damage, which may enable reuse of this communication apparatus or electronic device itself or reading of the information recorded in this communication apparatus or electronic device without problem. The above "inside or surface of the tire 1 as a waste tire" refers to a tire outer surface facing the outside and/or a tire inner surface facing the tire lumen. The above "RF tag consisting of an IC chip and an antenna" is also referred to as a Radio Frequency Identification (RFID) tag, in general. Furthermore, the above "electronic device" refers to an apparatus including electronic components.

As exemplified in FIG. 3, in the hole forming process, the hole 20 is preferably formed on the side portion 16 of the tire 1 (see FIG. 1) as a waste tire. In this case, the hole 20 is more preferably formed on each of a pair of side portions 16, the side portions 16 on both sides in the tire width direction of the tire 1 as a waste tire.

In the tire 1, for example, the blade 30a in the crusher 30 in the above example is less likely to catch on the side portion 16 with a relatively thin and flexible gauge and less large local unevenness, relative to the tread portion 11 with a relatively thick gauge and generally large unevenness such as the grooves 11a. Thus, in the hole forming process, forming the hole 20 on the side portion of the waste tire makes the blade 30a easier to catch on this side portion as well, which more facilitates the crush of the waste tire and therefore more increase the crushing efficiency of the waste tire. A case where the hole 20 is formed on each of the side portions on both sides in the tire width direction of the waste tire makes the blade 30a easier to catch on the waste tire at more positions, which more increases the crushing efficiency of the waste tire.

As described above, from a viewpoint that it is more effective for an increase in the crushing efficiency of the waste tire to form the hole 20 on a more flexible part of the tire 1, in the hole forming process, the hole 20 is more preferably formed at a position outside in the tire radial direction with respect to the bead core 13a in the bead portion 13, of the side portion 16 of the tire 1 (see FIG. 1) as a waste tire and is further preferably formed at this position on each side in the tire width direction.

From the same viewpoint, the hole 20 is more preferably formed at a position outside in the tire radial direction with respect to the bead portion 13 including the bead core 13a and the bead filler 13b, that is, formed on the sidewall portion 12 and is further preferably on each of the sidewall portions 12 on both sides in the tire width direction.

However, in the hole forming process, the hole 20 does not have to be formed on the above parts.

The hole 20 (each of the recess 21 and the through hole 22 in FIG. 3) formed in the hole forming process preferably has an opening area on the surface of the waste tire of 200 mm² or more. This opening area of the hole 20 of 200 mm² or more makes the blade in the crusher easier to sufficiently catch on the waste tire, which more increases the crushing efficiency of the waste tire.

However, this opening area of the hole 20 may be less than 200 mm².

Moreover, it is preferable that the hole 20 formed in the hole forming process is the recess 21 and that the volume of the recess 21 is 2000 mm³ or more. When the hole 20 is the recess 21, the volume of 2000 mm³ or more makes the blade in the crusher easier to sufficiently catch on the waste tire, which more increases the crushing efficiency of the waste tire.

However, even though the hole 20 is the recess 21, the volume may be less than 2000 mm³.

Furthermore, in the hole forming process, a plurality of holes 20 are preferably formed in total on the waste tire. In the hole forming process, a plurality of holes 20 being formed in total on the waste tire increases the number of positions on which the blade in the crusher easily catches, which more increases the crushing efficiency of the waste tire.

However, in the hole forming process, only one hole 20 may be formed on the waste tire.

The shape of the hole 20 formed in the hole forming process (in other words, the shape of the part removed by the hole 20, of the waste tire) is not particularly limited. In the example illustrated in FIG. 3, the roughly semicircular (that is, part of a sphere) recess 21 and the cylindrical through hole 22 are formed on the tire 1 as a waste tire. However, the recess 21 and the through hole 22 does not have to have these shapes. The shape of the recess 21 may be, for example, part of a spheroid, part of a polyhedron such as a cube or a cuboid, or another shape. The shape of the through hole 22 may be a cylindroid, a prism such as a quadrangular prism, or another shape.

The type of the hole 20 formed in the hole forming process is also not particularly limited. In the hole forming process, only one or a plurality of recesses 21 may be formed on one waste tire, only one or a plurality of through holes 22 may be formed on one waste tire, or as exemplified in FIG. 3, both of one or a plurality of recesses 21 and one or a plurality of through holes 22 may be formed on one waste tire.

When the hole 20 formed in the hole forming process is the recess 21, this recess 21 is preferably formed on not a tire inner surface on the inside WDI in the tire width direction facing the tire lumen but a tire outer surface on the outside WDO in the tire width direction facing the outside, of the surfaces of the waste tire, as illustrated in the example of FIG. 3. In the crushing process, which is described below, the blade in the crusher is less likely to enter the tire lumen side of the waste tire. Thus, the recess 21 being formed on the tire outer surface of the waste tire more increases the crushing efficiency, compared with a case where the recess 21 is formed on the tire inner surface of the waste tire.

### (Cutting process)

In this embodiment, subsequently, in the cutting process, the waste tire is cut to be separated into two or more parts (step S102). The cutting process (step S102) is performed prior to the crushing process (step S103), which is described below.

The waste tire processing method according to this embodiment including the cutting process performed prior to the crushing process, the cutting process of cutting the waste tire to be separated into two or more parts, reduces the size of the waste tire or a part thereof as a crushing target to be put into the crusher 30 in, for example, the example describe below, which also reduces the energy required for the crush and therefore more increases the crushing efficiency.

When the waste tire processed in this embodiment is a tire for truck and bus or a larger tire, in particular, a large or ultra-large tire such as a tire for construction and mine vehicles, including the cutting process performed prior to the crushing process, the cutting process of cutting the waste tire to be separated into two or more parts, (that is, performing the cutting process prior to the crushing process) is particularly effective for an increase in the crushing efficiency.

The means and method of the cut in the cutting process are not particularly limited. For example, the waste tire can be cut by a commonly known or commercially available cutter.

In the cutting process, the way of cutting the waste tire is not particularly limited. However, from a viewpoint of ease of cutting and therefore increasing the cutting efficiency and the like, the waste tire is preferably cut at least in the tire width direction to be separated into two or more parts in the tire circumferential direction.

In the cutting process, the number of parts into which the waste tire is cut and separated is not particularly limited so long as the number is two or more (that is, separated into two or more). However, from a viewpoint of increasing the cutting efficiency and the like, the number of parts is preferably 2 to 16, more preferably 4 to 16, and further preferably 4 to 8. In particular, when the waste tire is an ultra-large tire such as a tire for construction and mine vehicles, this number is preferably 8 to 32, more preferably 16 to 32.

In this embodiment, as illustrated in FIG. 2, the cutting process is performed after the hole forming process. That is, in this embodiment, the cutting process is performed prior to the crushing process and after the hole forming process.

The cutting process of separating the waste tire into two or more parts being performed after the hole forming process more facilitates the work in the hole forming process and therefore increases the efficiency of the hole forming process, compared with a case where the cutting process is performed prior to the hole forming process.

However, the cutting process may be performed prior to the hole forming process. In particular, when the waste tire is an ultra-large tire such as a tire for construction and mine vehicles, the cutting process being performed prior to the hole forming process may easily increase the efficiency of the hole forming process.

### (Crushing process)

In this embodiment, subsequently, in the crushing process, the waste tire is crushed using a blade in a crusher having the blade (step S103). The crushing process (step 103) is performed after the above hole forming process (step S101). More specifically, in this embodiment, the crushing process (step 103) is performed after the above hole forming process (step S101) and cutting process (step S102).

The waste tire processing method of this embodiment includes the crushing process performed after the hole forming process, the crushing process of crushing the waste tire using a blade in a crusher having the blade. Thus, the crushing of a waste tire is effectively performed, and eventually, the waste tire can be finely crushed, which makes respective materials and components that have formed the waste tire easier to be utilized again and therefore enables the waste tire to be recycled.

FIG. 4 and FIG. 5 illustrate one example of a commonly known crusher that can be used in the crushing process according to this embodiment. However, the crusher that can be used in the crushing process does not have to be a crusher exemplified below. The crusher may be a crusher with any configuration so long as it has a blade used for crushing the waste tire. The "blade used for crushing the waste tire" refers to a blade that can shred and crush the waste tire.

As illustrated in FIG. 4, the crusher 30 of this example has four rotary cutters 31 to 34 in this example, which rotate with mutually facing one another. As illustrated in FIG. 4 and FIG. 5, the respective rotary cutters 31, 32, 33, and 34 have rotation shafts 311, 321, 331, and 341 having mutually parallel rotational axes between these respective cutters, and a plurality of rotary blade portions 312, 322, 332, and 342 provided around these respective rotation shafts and arranged along the rotational axis directions of the rotation shafts, respectively. The respective rotary blade portions 312, 322, 332, and 342 have 6 pieces of blades 312a, 322a, 332a, and 342a (herein, also collectively referred to as "blades 30a") in this example, respectively, with tips protruding to the outside of these rotary blade portions in axis direction vision viewed from the above rotational axis direction, and forward in the rotation direction. As illustrated in FIG. 5, the respective rotary blade portions, for example, the blades 312a of the rotary blade portion 312 and the blades 322a of the rotary blade portion 322 are arranged such that respective side surfaces are mutually sandwiched to mutually have predetermined slight clearances 35.

The waste tire put into the crusher 30 in this example is shredded and crushed using the above blades 30a (312a, 322a, 332a, and 342a). More specifically, the waste tire put into the crusher 30 in this example is shredded and crushed by the above blades 30a (312a, 322a, 332a, and 342a).

In this embodiment, the crush in the crushing process may be performed in several stages. In other words, the crushing process may include a plurality of crushing processes, for example, a primary crushing process (fracturing process), a secondary crushing process (the present crushing process), and the like to sequentially crush the waste tire into finer fragments.

In this embodiment, other processes, for example, a separating process of separating the crushed fine fragments into rubber and metal may be performed after the crushing process.

The above describes exemplary embodiments of the present disclosure, and various changes can be made without departing from the scope of the claims.

### INDUSTRIAL APPLICABILITY

The waste tire processing method according to this disclosure can be preferably utilized to recycle waste tires of any type of tires such as passenger vehicle pneumatic tires, pneumatic tires for truck and bus, and pneumatic tires for construction and mine vehicles.

### REFERENCE SIGNS LIST

- 1: tire
- 11: tread portion
- 11a: groove
- 12: sidewall portion
- 13: bead portion
- 13a: bead core
- 13b: bead filler
- 14: carcass
- 15: belt
- 16: side portion
- 20: hole
- 21: recess
- 22: through hole
- 30: crusher
- 31, 32, 33, 34: rotary cutter
- 311, 321, 331, 341: rotation shaft
- 312, 322, 332, 342: rotary blade portion
- 30a, 312a, 322a, 332a, 342a: blade
- 35: clearance
- CL: tire equatorial plane
- RD: tire radial direction
- WD: tire width direction
- WDI: inside in the tire width direction
- WDO: outside in the tire width direction

## Claims

1. A waste tire processing method being available to recycle a waste tire, the method comprising:
a hole forming process of forming a hole that is a recess or a through hole on the waste tire; and
a crushing process performed after the hole forming process, the crushing process of crushing the waste tire using a blade in a crusher having the blade.

2. The waste tire processing method according to claim 1, further comprising a cutting process performed prior to the crushing process, the cutting process of cutting the waste tire to be separated into two or more parts.

3. The waste tire processing method according to claim 2, wherein the cutting process is performed after the hole forming process.

4. The waste tire processing method according to any one of claims 1 to 3, wherein the hole is formed on a side portion of the waste tire in the hole forming process.

5. The waste tire processing method according to any one of claims 1 to 4, wherein the hole has an opening area of 200 mm² or more on a surface of the waste tire.

6. The waste tire processing method according to any one of claims 1 to 5, wherein the hole is a recess and has a volume of 2000 mm³ or more.

7. The waste tire processing method according to any one of claims 1 to 6, wherein a plurality of the holes are formed in total on the waste tire in the hole forming process.

8. The waste tire processing method according to any one of claims 1 to 7, wherein the hole is formed on a side portion on each side in the tire width direction of the waste tire in the hole forming process.
